# EUROPÄISCHE PATENTSCHRIFT

(11) **EP 1 606 037 B1**
(45) Veröffentlichungstag und Bekanntmachung des Hinweises auf die Patenterteilung: **28.12.2011**
(21) Anmeldenummer: 04722299.7
(22) Anmeldetag: 22.03.2004
(51) Int. Cl.: B01D 36/00

(54) **FILTERSYSTEM FÜR KRAFTSTOFF**
FUEL FILTERING SYSTEM
SYSTEME DE FILTRE A CARBURANT

(30) Priorität: 21.03.2003 DE 10313867
(43) Veröffentlichungstag der Anmeldung: 21.12.2005
(73) Patentinhaber: MANN+HUMMEL GmbH, 71638 Ludwigsburg (DE)
(72) Erfinder: KLEIN, Gunnar-Marcel, 71720 Oberstenfeld (DE); STAUDACHER, Uwe, 74357 Bönnigheim (DE); KIEDAISCH, Steffi, 71638 Ludwigsburg (DE)
(74) Vertreter: Voth, Gerhard
(86) Internationale Anmeldenummer: PCT/EP2004/050341
(87) Internationale Veröffentlichungsnummer: WO 2004/082804

(56) Entgegenhaltungen:
- DE-A- 3 440 506
- GB-A- 2 115 305
- US-A- 3 406 831

## Beschreibung

Die Erfindung betrifft ein Filtersystem für Kraftstoff, insbesondere Dieselfilter, wobei ein Partikelfilter in einem Gehäuse vorgesehen ist nach dem Oberbegriff des unabhängigen Patentanspruches 1.

Aus der US 5,084,170 ist ein Kraftstofffilter zu entnehmen. Dieser weist ein Gehäuse auf, in welchem ein Hauptfilterelement und ein zweites Filterelement vorgesehen sind. Das Hauptfilterelement wird von innen nach außen durchströmt. Außerdem hat dieses koaleszierende Eigenschaften, so dass evtl. im Kraftstoff vorhandenes Wasser koaliert, d. h. sich größere Wassertropfen bilden. Diese gelangen in einen Wassersammelraum. Damit die Wassertropfen nicht durch das zweite Filterelement hindurchströmen, ist das Filterelement mit wasserabstoßenden Materialien, insbesondere Silicon versehen, so dass sich eine äußere Wasserbarriere bildet. Sowohl das erste Filterelement als auch das zweite Filterelement besteht aus einem gefalteten Filterpapier oder Filtervlies. Während die Durchströmung des ersten Filterelementes von innen nach außen erfolgt, wird das zweite Filterelement von außen nach innen durchströmt und der gereinigte Kraftstoff in einem Rohr einer Reinflüssigkeitsleitung zugeführt. Ein Nachteil dieses Aufbaus besteht darin, dass das Hauptfilterelement aufgrund seiner filterwirksamen Eigenschaften mit Schmutz beladen wird und dieser Schmutz die Durchströmung verringert bzw. behindert. Außerdem verliert das Hauptfilterelement mit der Zeit seine Eigenschaften als Coalescer, dies bedeutet, dass insgesamt das Filtersystem seine wasserabscheidenden Eigenschaften verliert bzw. diese Wasserabscheidung sich bis zum Austausch des Filterelementes verschlechtert.

Ein Filtersystem für Kraftstoff gemäß dem Obergriff des unabhängigen Patentanspruchs 1 ist aus der GB 2 115 305 A bekannt. Im Falle des Standes der Technik strömt der zu reinigende Kraftstoff zunächst in einem Zuführrohr im Inneren des Filtersystems an einem Partikelfilter und einem Coalescer-Element vorbei und strömt dann von unten nach oben zunächst durch das Coalescer-Element und dann durch den Partikelfilter. Es ergeben sich zwei Wasserabscheidebereiche, welchen jeweils ein unterhalb angeordneter Auffangbereich zugeordnet ist.

Der Erfindung liegt die Aufgabe zugrunde, die genannten Nachteile zu vermeiden und ein Filtersystem für Kraftstoffe zu schaffen, welches über die gesamte Standzeit des Filterelementes eine hochwirksame Abscheidung gewährleistet.

Diese Aufgabe wird ausgehend von dem Oberbegriff des unabhängigen Patentanspruches 1 durch dessen kennzeichnende Merkmale gelöst.

Der wesentliche Vorteil der Erfindung liegt darin, dass das Coalescer-Element sich durch irgendwelche Schmutzpartikel nicht zusetzen kann, sondern auch bei einem sehr großen Schmutzanfall ausreichend durchlässig bleibt und seine koaleszierenden Eigenschaften über die gesamte Standzeit des Filterelementes erhalten bleiben.

In einer vorteilhaften Ausgestaltung ist das Coalescer-Element ein sternförmig gefaltetes Element mit einer relativ geringen Durchströmungsfläche. Sie beträgt weniger als 1/3 der Filterfläche des Partikelfilters.

In einer alternativen Ausgestaltung besteht das Coalescer-Element aus einem offenporigen Vliesmaterial, das keine filterwirksamen Eigenschaften aufweist.

Zur weiteren Unterstützung der Wasserausscheidung aus Kraftstoff ist der Partikelfilter erfindungsgemäß aus einem hydrophoben Material aufgebaut bzw. weist eine hydrophobe Oberfläche auf. Dies verhindert einen Eintritt von Wasser in den Partikelfilter. Das abgeschiedene Wasser sammelt sich im unteren Bereich des Partikelfilters oder unterhalb des Partikelfilters in einem Auffangbereich.

Gemäß einer weiteren Ausgestaltung der Erfindung besteht der Partikelfilter aus mehreren Lagen eines Filtermediums. Es hat sich hier insbesondere bewährt, die anströmseitige Lage aus einem Meltblown-Vlies herzustellen und die reinseitige Lage aus einem überwiegend zellulosehaltigen, ggf. kalandrierten oder verdichteten Filterpapier herzustellen.

Das Coalescer-Element kann beispielsweise ein Polyester- oder ein Polyamidvlies sein, welches axial oder radial durchströmt wird. Es besteht auch die Möglichkeit, Glasfaserpackungen zu verwenden, die axial oder radial durchströmt werden. Ebenso ist Baumwolle, Linters oder Rayon geeignet, wobei die Vliespackungen eine hydrophile Imprägnierung aufweisen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzeiheiten der Erfindung werden In der Zeichnung anhand eines Ausführungbeispieles beschrieben. Hierbei zeigt
Figur 1 die Schnittdarstellung eines Ktaftstofffilters in schematischer Form,
Figur 2 eine alternative Gestaltung eines Kraftstofffilters in Schnittdarstellung.

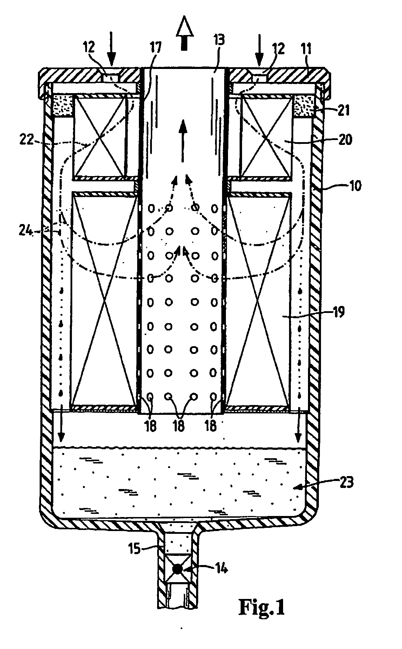

Ein Kraftstofffilter gemäß Figur 1 besteht aus einem Gehäuse 10, welches im Wesentlichen topfförmig gestaltet ist. Das Gehäuse ist im oberen Bereich durch einen Deckel 11 verschlossen. Dieser Deckel weist Eintrittsöffnungen 12 zum Einströmen des Kraftstoffes auf sowie eine Austrittsöffnung 13, aus welcher der gereinigte Kraftstoff entnommen werden kann. Am unteren Ende des Gehäuses 10 befindet sich ein Wassaraustragventil 14 an einem Rohrstutzen 15. Innerhalb des Gehäuses befindet sich ein Steigrohr 17. Dieses ist im Bereich des Partikelfilterelementes durchlässig, d. h. mit Öffnungen 18 versehen.

Der Partikelfilter 19, welcher über das Steigrohr 17 aufgeschoben ist, besteht aus einem zickzackförmig gefalteten Filtermaterial, welches beispielsweise mehrschichtig aufgebaut sein kann. Oberhalb des Partikelfilters 19 ist ein Coatescer-Bement 20 angeordnet. Dieses besteht in dem gezeigten Beispiel ebenfalls aus einem zickzackförmig gefalteten Medium. Dieses Medium kann ein Polyestennaterial, ein Polyamid oder ein anderes Material mit koaleszierenden Eigenschaften für Wasser sein. Das Element ist an dem Gehäuse 10 0 über eine Dichtung 21 befestigt

Über die Eintrittsöffnung 12 strömt das zu reinigende Medium, wie beispielsweise Dieselkraftstoff ein und durchströmt gemäß dem Pfeil 22 das Coalescar-Element 20 von innen nach außen. Das Wasser, das sich in dem Kraftstoff befindet, koallert zu großen bzw. größeren Ansammlungen oder Tröpfchen, strömt nach unten und sammelt sich innerhalb eines Wasserreservoirs 23. Der zu reinigende Kraftstoff strömt von außen nach innen gemäß den Pfeilen 24 durch das Filterelement wird dort gereinigt und verlässt über die Öffnungen 18 des Steigrohres 17 und die Austrittsöffnung 13 das Filtersystem. Sofern sich im Wasserreservoir 23 Wasser bis zum einem bestimmten Pegel angesammelt hat, kann dies über das Wasseraustragsventil 14 entfernt werden.

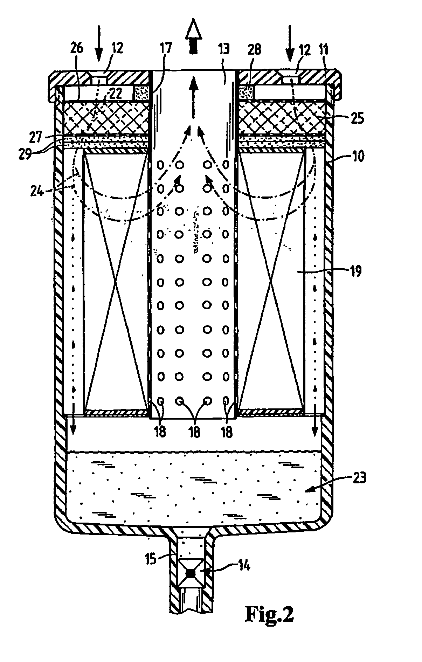

Figur 2 zeigt eine Variante. Gleiche Teile sind mit gleichen Bezugszeichen versehen. Anstelle eines zickzackförmig gefalteten Coalescor-Bomentes wird hier ein Schaumstoffkörper 25 verwendet. Dieser ist zwischen zwei Stützgitter 26, 27 eingebettet. Das obere Stützgitter ist mit einer Dichtung 28 versehen. Diese Dichtung liegt an dem Steigrohr 17 an. Anstelle eines Schaumstoffkörpers kann auch eine Glaswollepackung oder ein Packungsmaterial verwendet werden, welches koaleszierend wirkt.

Zwischen dem Stützgitter 27 und dem Partikelfilterelement 19 befindet sich eine oder zwei Drainageschichten 29, welche ein Strömen der Flüssigkeit in radialer Richtung er möglichen. Damit kann die zu reinigende Flüssigkeit von außen nach innen den Partikelfilter durchströmen und das abgeschiedene Wasser im Bereich der Gehäusewand nach unten abgeleitet werden.

## Patentansprüche

1. Filtersystem für Kraftstoff, insbesondere Dieselfilter, wobei ein Partikelfilter (19) in einem Gehäuse (10) vorgesehen ist, das im oberen Bereich durch einen Deckel (11) verschlossen ist, wobei dieser Deckel Eintrittsöffnungen (12) zum Einströmen des Kraftstoffes sowie eine Austrittsöffnung (13) aufweist, aus welcher der gereinigte Kraftstoff entnommen wird, wobei ein Coalescer-Element (20) dem Partikelfilter (19) vorgeschaltet ist und der Kraftstoff zunächst das Coalescer-Element (20) durchströmt, anschließend den Partikelfilter (19) durchströmt und dort gereinigt wird, wobei das aus dem Kraftstoff abgeschiedene Wasser sich unterhalb in einem Auffangbereich (23) des Gehäuses (10) ansammelt, und wobei das Coalescer-Element (20) und der Partikelfilter (19) axial übereinander angeordnet sind, **dadurch gekennzeichnet, dass** das Coalescer-Element (20) oberhalb des Partikelfilters (19) angeordnet ist und keine filterwirksamen Eigenschaften für den Kraftstoff aufweist, wobei der Partikelfilter (19) eine hydrophobe Oberfläche aufweist, und wobei das Coalescer-Element (20) zu einer Verbesserung der Wasserabscheidung von im Kraftstoff enthaltenen Wasser am nachgeschalteten Partikelfilter (19) führt, und wobei in dem Gehäuse (10) ein Steigrohr (17) vorgesehen ist, über welches der aus einem zickzackförmig gefalteten Filtermaterial bestehende Partikelfilter (19) aufgeschoben ist, und wobei das Steigrohr (17) im Bereich des Partikelfilters (19) mit Öffnungen (18) versehen und damit durchlässig ist, wobei der gereinigte Kraftstoff über die Öffnungen (18) des Steigrohres (17) und die Austrittsöffnung (13) das Filtersystem verlässt.

2. Filtersystem nach Patentanspruch 1, **dadurch gekennzeichnet, dass** das Coalescer-Element (20) ein sterngefaltetes Element ist, dessen Durchströmungsfläche geringer als 1/3 der Filterfläche des Partiketfilters (19) ist.

3. Filtersystem nach Patentanspruch 1, **dadurch gekennzeichnet, dass** das Coalescer-Element (20) ein Vlieskörper ist, welcher im Wesentlichen zylindrisch gestaltet ist, wobei dieser längs seiner Zylinderachse oder radial durchströmt ist.

4. Filtersystem nach einem der vorherigen Patentansprüche, **dadurch gekennzeichnet, dass** der Partikelfilter (19) aus mehreren Lagen eines Filtermediums aneinandergefügt ist, bei dem ein in Durchströmungsrichtung zunehmender Abscheidegrad für die auszufilternden Partikel aufweist, wobei die anströmseitige Filterlage aus synthetischen Fasern hergestellt ist und die abströmseitige Filterlage aus einem überwiegend zellulosehaltigen Papier besteht.

5. Filtersystem nach Patentanspruch 4, **dadurch gekennzeichnet, dass** die anströmseitige Lage aus einem Meltblown-Vlies mit 15 g bis 300 g pro Quadratmeter Flächengewicht und die reinseitige Lage aus einem überwiegenden zellulosehaltigen, ggf, kalandrierten oder verdichteten Filterpapier mit ca. 50 g bis 300 g pro Quadratmeter Flächengewicht besteht.

6. Filtersystem nach Patentanspruch 4, **dadurch gekennzeichnet, dass** zwischen dem anströmseitigen Filtermedium und dem abströmseitigen Filtermedium als dritte Lage ein ggf. kalandriertes Meltblown-Vlies mit einem Flächengewicht von 15 g bis 300 g pro Quadratmeter angeordnet ist.

7. Filtersystem nach einem der vorherigen Patentansprüche, **dadurch gekennzeichnet. dass** das Coalescer-Element (20) aus Schafwolle, Glaswolle, Polyester, Polyethylen, Polypropylen oder Polyamid mit hydrophiler Imprägnierung besteht.

8. Filtersystem nach einem der Patentansprüche 1 bis 6, **dadurch gekennzeichnet, dass** das Coalescer-Element (20) aus einem gradierten, trockengelegten Stapelfaservlies, einem Meltblown-Vlies mit hydrophiler Imprägnierung, einem Glasfasermedium mit oder ohne Imprägnierung oder einem Metallsiebgewebe besteht.

9. Filtersystem nach einem der Patentansprüche 1 bis 7, **dadurch gekennzeichnet, dass** das Coalescer-Element (20) aus stemgefalteten Zellulosefasern besteht, wobei die Zellulosefasern eine hydrophile Imprägnierung aufweisen.

10. Filtersystem nach Patentanspruch 3, **dadurch gekennzeichnet, dass** zwischen dem Coalescer-Element (20) und dem Partikelfilter (19) eine Drainageschicht (29) vorgesehen ist.

11. Filtersystem nach Patentanspruch 3, **dadurch gekennzeichnet, dass** das Coalescer-Element (20) eintritts- und austrittsseitig mit einem Lochblech oder einem Stützgitter (26, 27), insbesondere aus Kunststoff versehen ist.

## Claims

1. Filter system for fuel, in particular Diesel filter, a particle filter (19) being provided in a housing (10) which is closed in the upper section by a cover (11), this cover featuring inflow openings (12) for the inflowing fuel as well as an outflow opening (13) through which the cleaned fuel is withdrawn, a coalescer element (20) being disposed upstream of the particle filter (19) and the fuel flowing first through the coalescer element (20), then through the particle filter (19) and being cleaned there, the water separated from the fuel being collected underneath in a collecting area (23) of the housing (10), and the coalescer element (20) and the particle filter (19) being arranged axially one above the other, **characterized in that** the coalescer element (20) is disposed above the particle filter (19) and that it does not feature any filter-effective properties for the fuel, the particle filter (19) featuring a hydrophobic surface, and the coalescer element (20) leading to an improvement of the water separation of water contained in the fuel at the downstream particle filter (19), and a riser pipe (17) being provided in the housing (10) onto which the particle filter (19) consisting of a fanfold filter material is slid, and the riser pipe (17) being provided with openings (18) in the area of the particle filter (19) and thus being permeable, the cleaned fuel leaving the filter system via the openings (18) of the riser pipe (17) and the outflow opening (13).

2. Filter system according to patent claim 1, **characterized in that** the coalescer element (20) is a star-pleated element the through-flow area of which is smaller than 1/3 of the filter area of the particle filter (19).

3. Filter system according to patent claim 1, **characterized in that** the coalescer element (20) is a fleece body which has a substantially cylindrical design, this fleece body being flowed through along its cylinder axis or radially.

4. Filter system according to one of the above patent claims, **characterized in that** the particle filter (19) is composed by several layers of a filter medium which features in through-flow direction an increasing degree of separation for particles to be filtered, the filter layer at the inflow side being made of synthetic fibers and the filter layer at the outflow side being made of a mainly cellulosic paper.

5. Filter system according to patent claim 4, **characterized in that** the layer at the inflow side consists of a meltblown fleece with 15 g up to 300 g per square meter grammage and that the layer at the clean side consists of a mainly cellulosic, possibly calandered or compressed filter paper with approx. 50 g up to 300 g per square meter grammage.

6. Filter system according to patent claim 4, **characterized in that** between the filter medium at the inflow side and the filter medium at the outflow side a possibly calandered meltblown fleece is disposed as third layer with a grammage of 15 g up to 300 g per square meter.

7. Filter system according to one of the above patent claims, **characterized in that** the coalescer element (20) consists of sheep wool, glass wool, polyester, polyethylene, polypropylene or polyamide with hydrophilic impregnation.

8. Filter system according to one of the patent claims 1 to 6, **characterized in that** the coalescer element (20) consists of a reinforced, dried staple fiber fleece, a meltblown fleece with hydrophilic impregnation, a glass fiber medium with or without impregnation or a metallic screen cloth.

9. Filter system according to one of the patent claims 1 to 7, **characterized in that** the coalescer element (20) consists of star-pleated cellulose fibers, the cellulose fibers featuring a hydrophilic impregnation.

10. Filter system according to patent claim 3, **characterized in that** between the coalescer element (20) and the particle filter (19) a drainage layer (29) is provided.

11. Filter system according to patent claim 3, **characterized in that** the coalescer element (20) is provided on the inflow side and on the outflow side with a perforated plate or a support grid (26, 27), in particular made of synthetic material.

## Revendications

1. Système de filtre, notamment filtre diesel, un filtre à particules (19) étant prévu dans un boîtier (10) qui est fermé, dans sa partie supérieure, par un couvercle (11), ce couvercle comportant des ouvertures d'entrée (12) destinées à faire entrer le carburant et une ouverture de sortie (13) de laquelle le carburant purifié est prélevé, un élément coalesceur (20) étant installé en amont du filtre à particules (19) et le carburant traversant en premier l'élément coalesceur (20) puis le filtre à particules (19) pour être nettoyé à cet endroit, l'eau extraite du carburant étant collectée en dessous dans une partie collectrice (23) du boîtier (10), et l'élément coalesceur (20) et le filtre à particules (19) étant disposés de manière axiale l'un au-dessus de l'autre, **caractérisé en ce que** l'élément coalesceur (20) est placé au-dessus du filtre à particules (19) et ne présente pas de propriété filtrante pour le carburant, le filtre à particules (19) comportant une surface hydrophobe, et l'élément coalesceur (20) entraînant une amélioration de la séparation de l'eau contenue dans le carburant au niveau du filtre à particules (19) installé en aval, et une conduite montante (17) au-dessus de laquelle est glissé le filtre à particules (19) constitué d'un matériau filtrant plié en accordéon étant prévue dans le boîtier (10), et la conduite montante (17) étant dotée d'ouvertures (18) dans la zone du filtre à particules (19) et étant ainsi perméable, le carburant purifié quittant le système de filtre par l'intermédiaire des ouvertures (18) de la conduite montante (17) et par l'ouverture de sortie (13).

2. Système de filtre selon la revendication de brevet 1, **caractérisé en ce que** l'élément coalesceur (20) est un élément plié en étoile dont la surface de passage est inférieure au tiers de la surface du filtre à particules (19).

3. Système de filtre selon la revendication de brevet 1, **caractérisé en ce que** l'élément coalesceur (20) est un corps en non-tissé qui est essentiellement exécuté de manière cylindrique, ce corps étant traversé par un flux le long de l'axe du cylindre ou en sens radial.

4. Système de filtre selon l'une des revendications de brevet précédentes, **caractérisé en ce que** le filtre à particules (19) est composé de plusieurs couches d'un milieu filtrant qui présente un degré de séparation des particules à filtrer croissant dans le sens du flux, la couche filtrante côté admission étant faite de fibres synthétiques et la couche filtrante côté écoulement étant constituée d'un papier principalement cellulosique.

5. Système de filtre selon la revendication de brevet 4, **caractérisé en ce que** la couche côté admission est composée d'un non-tissé meltblown d'un grammage de 15 g à 300 g par mètre carré et que la couche côté pur est composée d'un papier filtre principalement cellulosique, éventuellement calandré ou comprimé, d'un grammage d'env. 50 g à 300 g par mètre carré.

6. Système de filtre selon la revendication de brevet 4, **caractérisé en ce qu'**un non-tissé éventuellement calandré d'un grammage de 15 g à 300 g par mètre carré est disposé en tant que troisième couche entre le milieu filtrant côté admission et le milieu filtrant côté écoulement.

7. Système de filtre selon l'une des revendications de brevet précédentes, **caractérisé en ce que** l'élément coalesceur (20) est constitué de laine de mouton, de laine de verre, de polyester, de polyéthylène, de polypropylène ou de polyamide doté d'une imprégnation hydrophile.

8. Système de filtre selon l'une des revendications de brevet 1 à 6, **caractérisé en ce que** l'élément coalesceur (20) est constitué d'un non-tissé aiguilleté renforcé et asséché, d'un non-tissé meltblown doté d'une imprégnation hydrophile, d'un milieu à fibres de verre avec ou sans imprégnation ou d'un tissu métallique à tamis.

9. Système de filtre selon l'une des revendications de brevet 1 à 7, **caractérisé en ce que** l'élément coalesceur (20) est constitué de fibres cellulosiques pliées en étoile, les fibres cellulosiques étant dotées d'une imprégnation hydrophile.

10. Système de filtre selon la revendication de brevet 3, **caractérisé en ce qu'**une couche de drainage (29) est prévue entre l'élément coalesceur (20) et le filtre à particules (19).

11. Système de filtre selon la revendication de brevet 3, **caractérisé en ce que** l'élément coalesceur (20) est pourvu, du côté entrée et du côté sortie, d'une tôle perforée ou d'une grille de protection (26, 27), notamment en matière plastique.
